# FASCICULE DE BREVET EUROPEEN

(11) **EP 2 033 302 B1**
(45) Date de publication et mention de la délivrance du brevet: **23.12.2009**
(21) Numéro de dépôt: 07765994.4
(22) Date de dépôt: 03.05.2007
(51) Int. Cl.: H02M 3/158

(54) **PROCEDE ET DISPOSITIF DE CHARGE D'UN ELEMENT DE STOCKAGE D'ENERGIE ELECTRIQUE, NOTAMMENT UN ULTRACONDENSATEUR**
VERFAHREN UND VORRICHTUNG ZUR AUFLADUNG EINES STROMSPEICHERELEMENTS, IM BESONDEREN EINES ULTRAKONDENSATORS
METHOD AND DEVICE FOR CHARGING AN ELECTRICAL ENERGY STORAGE ELEMENT, IN PARTICULAR AN ULTRACAPACITOR

(30) Priorité: 29.06.2006 FR 0652719
(43) Date de publication de la demande: 11.03.2009
(73) Titulaire: VALEO EQUIPEMENTS ELECTRIQUES MOTEUR, 94046 Créteil Cedex (FR)
(72) Inventeur: LEBOEUF, Cédric, F-94000 Creteil (FR)
(86) Numéro de dépôt international: PCT/FR2007/051213
(87) Numéro de publication internationale: WO 2008/000978

(56) Documents cités:
- WO-A-01/89055
- FR-A1- 2 838 572
- US-A1- 2006 028 778

## Description

### DOMAINE TECHNIQUE DE L'INVENTION

La présente invention concerne un procédé de charge d'un élément de stockage d'énergie électrique, tel qu'un ultracondensateur, à partir d'un autre élément de stockage, tel qu'une batterie.

L'invention concerne aussi un dispositif de charge adapté à la mise en oeuvre du procédé, notamment sur un réseau d'alimentation en énergie électrique bitension de véhicule automobile.

### ARRIERE PLAN TECHNOLOGIQUE DE L'INVENTION

Dans un réseau de ce type, les deux éléments de stockage ont des tensions continues de service nominales différentes, et un convertisseur continu-continu (plus connu de l'homme de métier sous le vocable anglais de convertisseur DC-DC, DC étant les initiales de « direct current », ou « courant continu ») réversible agencé entre les deux éléments est nécessaire pour effectuer les transferts d'énergie de l'un à l'autre.

Un problème connu est celui de la charge initiale de l'élément de stockage ayant la tension nominale la plus élevée par l'autre élément jusqu'à la tension nominale de ce dernier.

Le problème technique est particulièrement difficile à résoudre quand il s'agit de charger un ultracondensateur de plusieurs dizaines, voire centaines, de Farad, à partir d'une batterie de 12V par exemple, car un appel de courant initial très important peut se produire.

En général, ce courant ne peut pas être fourni par le convertisseur DC-DC lui-même. Un dispositif additionnel est donc utilisé pour réaliser la charge initiale.

Le dispositif le plus simple connu est constitué par une résistance intercalée entre les deux éléments de stockage.

Cette solution simple présente plusieurs inconvénients :
- si la résistance est de faible valeur ohmique, afin de réduire la durée de la charge initiale, alors le courant de charge est important, ce qui conduit à utiliser une résistance de forte puissance et de coût élevé ;
- si l'on choisi une résistance de valeur acceptable en terme de puissance dissipée, par exemple 1 ohm, alors la durée de charge devient prohibitive (plus de 15 mn) ;
- une résistance, connectée en permanence entre les éléments, conduit à un courant de fuite important, et à une décharge d'un élément vers l'autre.

Dans la demande de brevet FR2838572, la société VALEO divulgue une solution qui élimine les inconvénients précités.

Cette solution consiste, au cours de la charge initiale du premier élément de tension nominale la plus grande, à mettre en service un convertisseur dévolteur entre la sortie du second élément de tension nominale la plus faible et l'entrée du convertisseur DC-DC, jusqu'au moment où la tension aux bornes du premier élément est égale à la tension nominale du second.

Le convertisseur dévolteur (plus connu de l'homme de métier sous le vocable anglais de « buck converter ») est constitué essentiellement d'un interrupteur statique, par exemple un transistor de type « MOSFET », dont la durée de fermeture par rapport à la durée d'ouverture permet de contrôler le courant de charge moyen.

Le transistor fonctionnant en commutation, l'inconvénient de la dissipation thermique élevée de la résistance est éliminé.

Cependant cette solution présente encore l'inconvénient de réduire le rendement global du transfert d'énergie entre les éléments de stockage.

En effet, le convertisseur dévolteur est utilisé uniquement dans la phase initiale de la charge du premier élément à partir du second élément, quand la tension aux bornes du premier élément est inférieure à la tension nominale du second élément.

Dans le cas d'une application à l'automobile, où le premier élément est un ultracondensateur, et le second élément est une batterie, cette situation est peu fréquente.

La majeure partie du temps, la tension aux bornes de l'ultracondensateur est supérieure à celle de la batterie, et l'interrupteur statique du convertisseur dévolteur constitue une charge résistive additionnelle en série qui pénalise le rendement du système, même si cet interrupteur est fermé en permanence.

De plus, le filtre placé en amont du convertisseur dévolteur, et destiné à filtrer à la fois les courants commutés par ce convertisseur dévolteur et par le convertisseur DC-DC, doit filtrer le découpage dû à ce convertisseur de type Buck, ce qui implique un surdimensionnement de ce filtre.

Le document US 2006 0028778 montre un dispositif de charge selon le préambule de la revendication 6.

### DESCRIPTION GENERALE DE L'INVENTION

La présente invention vise donc à améliorer les procédés connus de charge d'un premier élément de stockage de l'énergie électrique, notamment un ultracondensateur, à partir d'un second élément de stockage de l'énergie électrique, notamment une batterie.

Le premier élément présentant une première tension continue de service nominale, et le second élément présentant une seconde tension continue de service nominale inférieure à la première tension, le procédé de charge selon l'invention est du type de ceux mettant en oeuvre, de manière connue en soi, un convertisseur continu-continu réversible agencé entre les premier et second éléments.

Le procédé selon l'invention est remarquable en ce que :
- quand la tension de charge du premier élément est inférieure à la seconde tension, on met de plus en service un convertisseur dévolteur agencé entre le convertisseur continu-continu et le premier élément, et on met hors service le convertisseur continu-continu ;
- quand la tension de charge du premier élément est supérieure ou égale à la seconde tension, on met hors service le convertisseur dévolteur, et on met en service le convertisseur continu-continu.

De préférence, quand le convertisseur dévolteur est mis en service, on contrôle le courant de charge du premier élément au moyen d'un shunt, et en faisant varier le rapport cyclique d'un signal de commande d'un premier interrupteur statique agencé entre les bornes d'entrée et de sortie du convertisseur dévolteur.

Préférentiellement, quand le convertisseur continu-continu est en service, on contrôle le courant de charge du premier élément en commandant alternativement l'ouverture et la fermeture d'un deuxième et troisième interrupteurs statiques, agencés dans le convertisseur continu-continu et formant un pont diviseur en parallèle sur les bornes d'entrée du convertisseur dévolteur, le point milieu du pont étant connecté à une première inductance en série avec le shunt.

De préférence, on met hors service le convertisseur continu-continu en fermant le deuxième interrupteur et en ouvrant le troisième interrupteur.

Fort avantageusement, la décharge dudit premier élément est évitée en ouvrant les premier et deuxième interrupteurs.

L'invention concerne aussi un dispositif de charge d'un premier élément de stockage de l'énergie électrique, notamment un ultracondensateur, à partir d'un second élément de stockage de l'énergie électrique, notamment une batterie, adapté à la mise en oeuvre du procédé décrit ci-dessus.

Le premier élément présentant une première tension continue de service nominale, et le second élément présentant une seconde tension continue de service nominale inférieure à ladite première tension, le dispositif de charge selon l'invention est du type de ceux comprenant, de manière connue en soi, un convertisseur continu-continu réversible agencé entre les premier et second éléments.

Le dispositif de charge selon l'invention est remarquable en ce qu'il comprend de plus un convertisseur dévolteur agencé entre le convertisseur continu-continu et le premier élément et des moyens de commutation et de pilotage pour, quand la tension de charge du premier élément est inférieure à la seconde tension, mettre en service le convertisseur dévolteur et mettre hors service le convertisseur continu-continu et, quand la tension de charge du premier élément est supérieure ou égale à la seconde tension, mettre hors service le convertisseur dévolteur et mettre en service le convertisseur continu-continu.

De préférence, le convertisseur dévolteur est formé d'un premier interrupteur statique agencé entre les bornes d'entrée et de sortie du convertisseur dévolteur, et d'une diode agencée en parallèle sur les bornes de sortie de ce convertisseur dévolteur.

Préférentiellement, le convertisseur continu-continu est constitué par un deuxième et troisième interrupteurs statiques formant un pont diviseur en parallèle sur les bornes d'entrée du convertisseur dévolteur, le point milieu de ce pont étant connecté à une première inductance en série avec un shunt, et par une première capacité en parallèle sur le pont diviseur.

Le dispositif de charge selon l'invention comprend de plus fort avantageusement un premier filtre agencé entre le second élément et le convertisseur continu-continu, et un second filtre agencé entre le convertisseur dévolteur et le premier élément.

De préférence, le premier filtre est un filtre en pi formé par une deuxième inductance, et une deuxième et troisième capacités.

Le second filtre est aussi préférentiellement un filtre passe-bas formé par une troisième inductance, et une quatrième capacité.

Avantageusement, les premier et second filtres comportent chacun un fusible en série avec respectivement les deuxième et troisième inductances.

On notera également qu'un dispositif de charge selon l'invention apte à équiper un véhicule automobile pourra comprendre avantageusement des moyens commandés pour charger avec un courant faible le premier élément de stockage à partir du second élément de stockage, notamment une batterie en mauvais état de charge, afin d'autoriser un démarrage d'un moteur thermique du véhicule même à partir d'une batterie en mauvais état de charge

Ces quelques spécifications essentielles auront rendu évidents pour l'homme de métier les avantages apportés par le procédé et le dispositif de charge selon l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS

Les Figures 1 a et 1 b illustrent schématiquement un procédé de charge, connu de l'état de la technique, d'un élément de stockage de l'énergie à partir d'un autre élément.

Les Figures 2a et 2b illustrent schématiquement le procédé de charge d'un élément de stockage de l'énergie à partir d'un autre élément, selon l'invention.

La Figure 3 représente le schéma de principe d'un dispositif de charge, connu de l'état de la technique, d'un élément de stockage de l'énergie à partir d'un autre élément.

La Figure 4 représente le schéma de principe d'un mode de réalisation préféré du dispositif de charge d'un élément de stockage de l'énergie à partir d'un autre élément, selon l'invention.

### DESCRIPTION DU MODE DE REALISATION PREFERE DE L'INVENTION

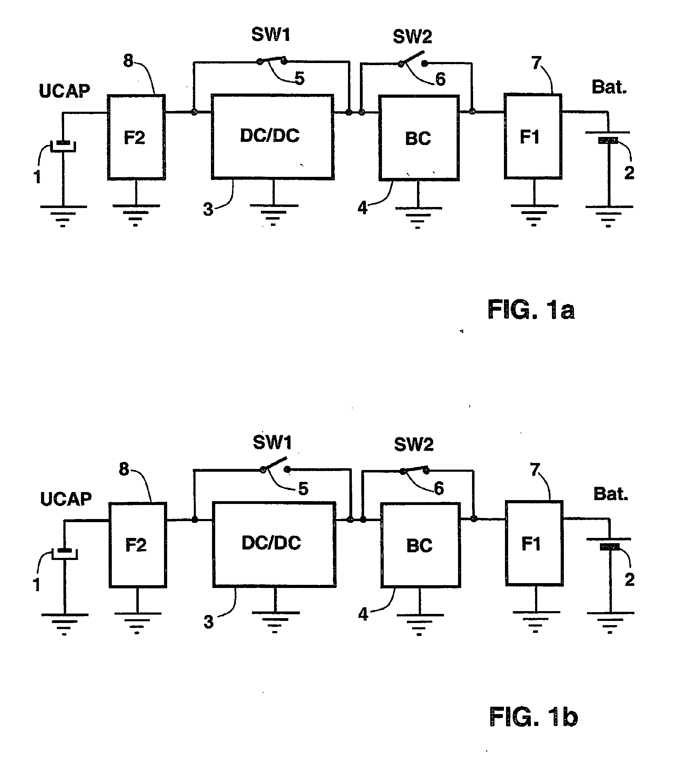

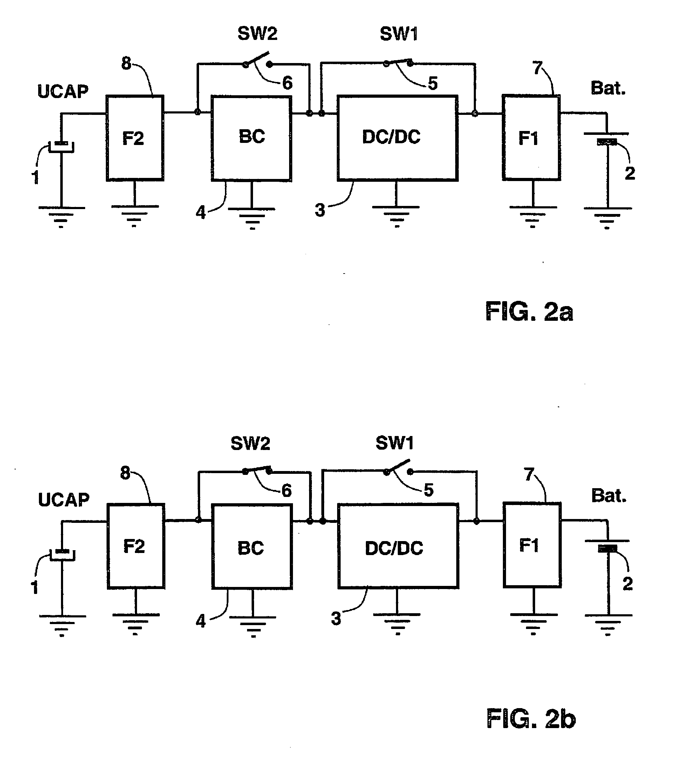

Les Figures 1a, 1b, 2a et 2b montrent schématiquement un premier élément de stockage de l'énergie électrique constitué par un ultracondensateur 1 associé à un second élément de stockage de l'énergie électrique constitué par une batterie 2.

Sur le réseau électrique de bord d'un véhicule automobile, la tension continue de service nominale aux bornes de l'ultracondensateur 1 peut varier par exemple de 14V à 28V, alors que la tension aux bornes de la batterie 2 est sensiblement de 12V.

Un convertisseur DC-DC réversible 3 assure le transfert d'énergie entre les deux éléments de stockage 1,2 en fonction des besoins électriques des différents organes et accessoires du véhicule.

Le problème de la charge initiale de l'ultracondensateur 1, appelée aussi par l'homme de métier « précharge », apparaît quand il s'agit de charger cette capacité 1 entre 0V et la tension nominale de la batterie 2 de 12V, c'est-à-dire en dehors du domaine de fonctionnement du convertisseur DC-DC réversible 3.

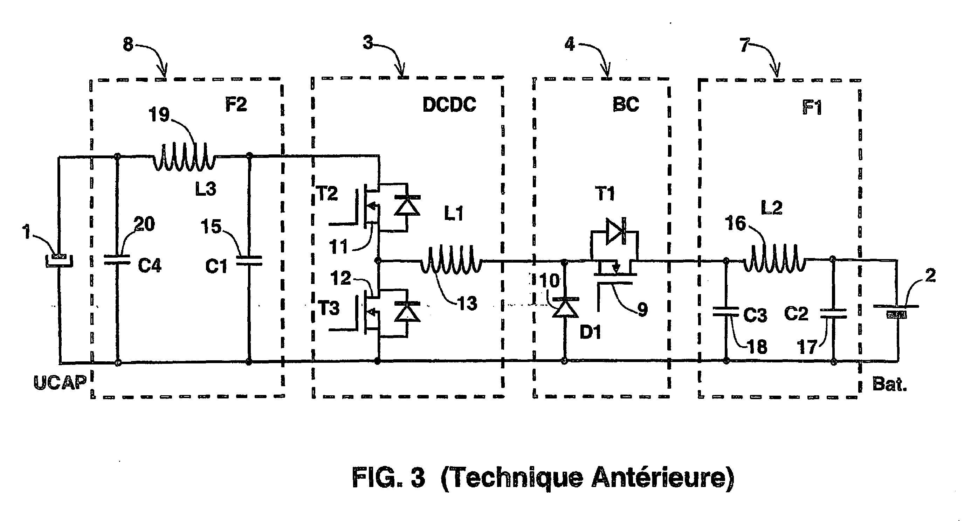

La solution déjà proposée par la société VALEO dans la demande FR2838572, et illustrée par la Figure 3, consiste à mettre en service un convertisseur dévolteur 4 (ou « buck converter ») entre la batterie 2 et le convertisseur DC-DC réversible 3 pendant la précharge.

En même temps, le convertisseur DC-DC réversible 3, devenu inutile, est placé dans un état le plus transparent possible, c'est-à-dire virtuellement shunté, comme le symbolise, sur la Figure 1a, un premier commutateur 5 fermé reliant son entrée et sa sortie.

L'ultracapacité 1 est donc, pendant la précharge, alimentée par la batterie 2 et le convertisseur dévolteur 4, dont la tension de sortie est contrôlée de manière à limiter le courant de charge instantané.

Quand la tension aux bornes de l'ultracondensateur 1 atteint la tension nominale de la batterie 2, le convertisseur DC-DC réversible 3 est remis en service, ce que symbolise le premier commutateur 5 ouvert de la Figure 1 b.

Le convertisseur dévolteur 4 est placé dans un état où il présente une résistance la plus faible possible dans le circuit du convertisseur DC-DC réversible 3, ce que symbolise, sur la Figure 1b, le second commutateur 6 fermé reliant l'entrée et la sortie du convertisseur dévolteur 4.

Le procédé connu de transfert d'énergie entre l'ultracondensateur 1 et la batterie 2 met également en oeuvre des filtres passe-bas 7,8 aux bornes des stockeurs 1,2 de manière à filtrer les courants commutés.

Le procédé selon l'invention, représenté sur les Figures 2a et 2b, diffère du procédé connu, représenté sur les Figures 1 a et 1 b, essentiellement par le fait que l'on met en oeuvre un convertisseur dévolteur 4 entre le convertisseur DC-DC réversible 3 et le premier élément de stockage d'énergie 1, au lieu de le mettre en oeuvre entre le second élément de stockage d'énergie 2 et le convertisseur DC-DC réversible 3.

Au cours de la précharge (Figure 2a), le convertisseur DC-DC réversible 3 est mis hors service, ce que symbolise le premier commutateur 5 fermé, tandis que le second commutateur 6 entre l'entrée et la sortie du convertisseur dévolteur 4 est ouvert.

Inversement, quand la précharge est terminée, le convertisseur DC-DC réversible 3 est remis en service, et le convertisseur dévolteur 4 est shunté symboliquement par la fermeture du second commutateur 6 (Figure 2b).

Le procédé représenté sur les Figures 2a et 2b procure une amélioration du rendement global du dispositif par rapport au procédé représenté sur les Figures 1 a et 1 b.

En effet, la tension aux bornes du premier élément de stockage 1 étant supérieure à celle aux bornes du second élément de stockage 2 en fonctionnement normal (Figure 2b), il en résulte que, pour une résistance équivalente présentée par le convertisseur dévolteur 4, mis hors service, donnée, le courant qui traverse cette résistance équivalente est plus faible dans le procédé selon l'invention, pour une même puissance transférée, qu'il ne serait si cette résistance équivalente était insérée entre le convertisseur DC-DC réversible 3 et le second élément de stockage 2, comme dans le procédé connu

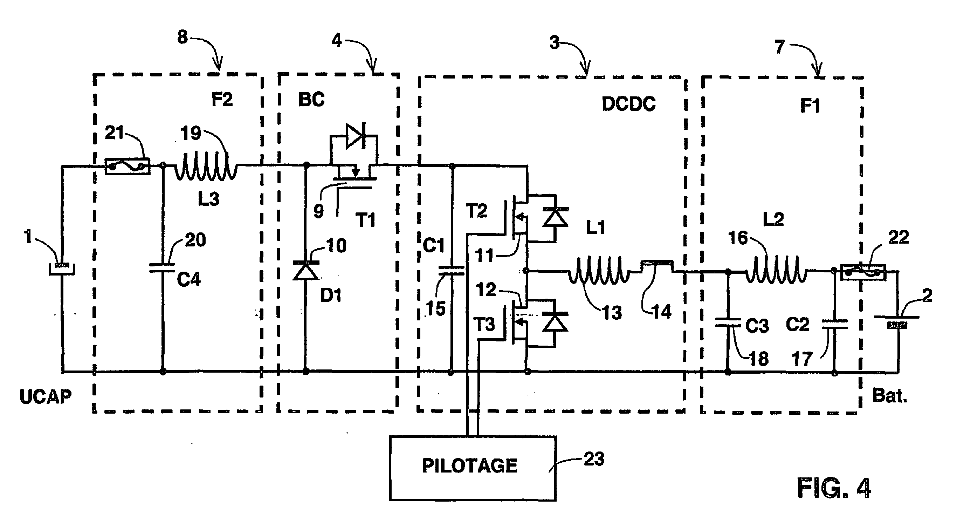

La comparaison détaillée de la Figure 4, donnant le schéma de principe d'un mode de réalisation préféré d'un dispositif implémentant le procédé représenté sur les Figures 2a et 2b, à la Figure 3, montrant le schéma de principe du dispositif mettant en oeuvre le procédé connu représenté sur les Figures 1 a et 1b, mettra en évidence d'autres avantages de l'invention par rapport à l'état de la technique.

Le convertisseur dévolteur 4 est formé d'un premier interrupteur statique 9, de préférence un transistor de type « MOSFET » de puissance, agencé entre l'entrée et la sortie, et d'une diode 10, ou d'un autre MOSFET, agencée en parallèle sur la sortie.

Par rapport au schéma identique du convertisseur dévolteur 4 montré sur la Figure 3, connecter ce convertisseur 4 entre le convertisseur DC-DC réversible 3 et l'ultracondensateur 1, procure un avantage qui est de protéger le convertisseur DC-DC réversible 3 d'une tension inverse aux bornes de l'ultracondensateur 1. Cependant, on notera que dans d'autres formes de réalisation une telle protection pourra être assurée au moyen d'un fusible disposé en entrée.

Comme le montre bien la Figure 4, le convertisseur DC-DC réversible 3 est constitué par un deuxième et troisième interrupteurs statiques 11,12 formant un pont diviseur en parallèle sur les bornes d'entrée du convertisseur dévolteur 4. Le point milieu du pont 11, 12 est connecté à une première inductance 13 en série avec un shunt 14 (résistance de très faible valeur). Le convertisseur DC-DC réversible 3 présente de plus une première capacité 15 en parallèle sur le pont diviseur 11,12.

Par comparaison avec le schéma de la Figure 3, l'agencement selon l'invention du convertisseur DC-DC réversible 3 montré sur la Figure 4 procure l'avantage, pendant la précharge, de filtrer le courant de charge par le filtre passe-bas constitué de la combinaison de la première inductance 13 et de la première capacité 15, en plus du filtrage obtenu par un premier filtre 7 formé par une deuxième inductance 16, et une deuxième et troisième capacités 17,18, présent dans les deux montages.

Il s'ensuit que la taille (et donc le coût), de ce premier filtre 7 peut être réduite par rapport au premier filtre 7 utilisé dans l'agencement connu montré sur la Figure 3.

Un deuxième filtre 8 est montré sur la Figure 4. Il s'agit d'un filtre passe-bas formé par une troisième inductance 19 et une quatrième capacité 20. Par rapport au montage de la Figure 3, ce deuxième filtre 8 comporte un fusible 21, en série avec la troisième inductance 19, qui protège complètement le convertisseur DC-DC réversible 4 en combinaison avec la diode 10 à la sortie du convertisseur dévolteur 4.

Pendant la précharge, le convertisseur DC-DC réversible 3 est mis hors service en maintenant fermé le deuxième interrupteur statique 11 et en maintenant ouvert le troisième 12 au moyen de tensions appropriées sur leurs grilles de commande.

L'intensité moyenne du courant de charge est dans ces conditions contrôlée par la résistance à l'état « fermé » du deuxième interrupteur statique 11, celle de la première inductance 13, le shunt 14 et le rapport cyclique d'un signal de commande appliqué sur la grille du premier interrupteur statique 9 du convertisseur dévolteur 4.

En fonctionnement normal, le convertisseur DC-DC réversible 3 élève la tension de la batterie 2, et le courant de charge de l'ultracondensateur 1 est contrôlé en pilotant de manière appropriée l'ouverture et la fermeture alternative des deuxième et troisième interrupteurs statiques 11,12 au moyen de signaux de commande appliqués sur leurs grilles.

La fonctionnalité ci-dessus de pilotage commandé des deuxième et troisième interrupteurs statiques 11,12 au moyen de signaux de commande autorise une charge de l'ultracondensateur 1 par un courant batterie de relativement faible intensité. Il est ainsi possible de charger l'ultracondensateur 1 à partir d'une batterie 2 en mauvais état de charge et de démarrer, malgré la batterie déficiente, le moteur thermique à partir de l'ultracondensateur 1 chargé.

Dans le mode de fonctionnement normal, le convertisseur dévolteur 4 est mis hors service en maintenant fermé le premier interrupteur statique 9 au moyen de la tension requise sur sa grille.

La résistance en série avec convertisseur DC-DC réversible 3 en fonctionnement que présente le convertisseur dévolteur 4 hors service est donc la résistance dans l'état « fermé », ou « résistance passante », du premier interrupteur statique 9.

Comme on l'a déjà indiqué, la tension dans cette partie 4 du montage est plus élevée qu'elle ne l'était dans la version antérieure. Pour une même puissance transférée, l'intensité qui circule dans la résistance passante 9 est donc plus faible, et par conséquent les pertes d'énergie sont plus faibles.

Pour une raison similaire, les pertes dans le dispositif selon l'invention quand le système est en veille, c'est-à-dire quand tous les interrupteurs statiques 9,11,12 sont ouverts, sont également plus faibles que dans le montage connu, puisqu'une résistance est ajoutée dans la partie du circuit présentant le plus fort potentiel.

Comme il va de soi l'invention ne se limite pas aux seuls modes d'exécution préférentiels décrits ci-dessus.

Notamment, le rendement global du système est augmenté, au prix d'un accroissement de la complexité du contrôle, en remplaçant, en variante, la diode 10 en parallèle sur les bornes de sortie du convertisseur dévolteur 4 par un transistor, de manière à réduire les pertes pendant la précharge (redressement synchrone).

L'invention embrasse donc toutes les variantes possibles de réalisation, dans la mesure où elles restent dans le cadre défini par les revendications ci-après.

## Revendications

1. Procédé de charge d'un premier élément de stockage (1) de l'énergie électrique, notamment un ultracondensateur (1), à partir d'un second élément de stockage (2) de l'energie électrique, notamment une batterie (2), ledit premier élément (1) présentant une première tension continue de service nominale, et ledit second élément (2) présentant une seconde tension continue de service nominale inférieure à ladite première tension, ce procédé mettant en oeuvre un convertisseur continu-continu réversible (3) agencé entre lesdits premier et second éléments (1,2), **caractérisé en ce que** :
- quand la tension de charge dudit premier élément (1) est inférieure à ladite seconde tension, on met de plus en service un convertisseur dévolteur (4) agencé entre ledit convertisseur continu-continu (3) et ledit premier élément (1), et on met hors service ledit convertisseur continu-continu (3);
- quand la tension de charge dudit premier élément (1) est supérieure ou égale à ladite seconde tension, on met hors service ledit convertisseur dévolteur (4), et on met en service ledit convertisseur continu-continu (3).

2. Procédé de charge selon la revendication 1, **caractérisé en ce que**, quand ledit convertisseur dévolteur (4) est mis en service, l'on contrôle le courant de charge dudit premier élément (1) au moyen d'un shunt (14) et en faisant varier le rapport cyclique d'un signal de commande d'un premier interrupteur statique (9) agencé entre les bornes d'entrée et de sortie dudit convertisseur dévolteur (4).

3. Procédé de charge selon la revendication 2, **caractérisé en ce que**, quand ledit convertisseur continu-continu (3) est en service, l'on contrôle le courant de charge dudit premier élément (1) en commandant alternativement l'ouverture et la fermeture d'un deuxième et troisième interrupteurs statiques (11,12), agencés dans ledit convertisseur continu-continu (3) et formant un pont diviseur en parallèle sur lesdites bornes d'entrée dudit convertisseur dévolteur (4), le point milieu dudit pont étant connecté à une première inductance (13) en série avec ledit shunt (14).

4. Procédé de charge selon la revendication 3, **caractérisé en ce qu'**on met hors service ledit convertisseur continu-continu (3) en fermant ledit deuxième interrupteur (11) et en ouvrant ledit troisième interrupteur (12).

5. Procédé de charge selon la revendication 4, **caractérisé en ce que** la décharge dudit premier élément (1) est évitée en ouvrant lesdits premier, deuxième et troisième interrupteurs (9,11,12).

6. Dispositif de charge d'un premier élément de stockage (1) de l'énergie électrique, notamment un ultracondensateur (1), à partir d'un second élément de stockage (2) de l'énergie électrique, notamment une batterie (2), ledit premier élément (1) présentant une première tension continue de service nominale, et ledit second élément (2) présentant une seconde tension continue de service nominale inférieure à ladite première tension, ce dispositif comprenant un convertisseur continu-continu réversible (3) agencé entre lesdits premier et second éléments (1,2), et comprenant de plus un convertisseur dévolteur (4) agencé entre ledit convertisseur continu-continu (3) et ledit premier élément (1) et des moyens de commutation (11, 12, 9) et de pilotage (23) **caractérisé en ce que** ces moyens de commutation et de pilotage (23), quand la tension de charge dudit premier élément (1) est inférieure à ladite seconde tension, mettent en service ledit convertisseur dévolteur (4) et hors service ledit convertisseur continu-continu (3) et, quand la tension de charge dudit premier élément (1) est supérieure ou égale à ladite seconde tension, mettent hors service ledit convertisseur dévolteur (4) et mettent en service ledit convertisseur continu-continu (3).

7. Dispositif de charge selon la revendication 6, **caractérisé en ce que** ledit convertisseur dévolteur (4) est formé d'un premier interrupteur statique (9) agencé entre les bornes d'entrée et de sortie dudit convertisseur dévolteur (4), et d'une diode (10) agencée en parallèle sur les bornes de sortie dudit convertisseur dévolteur (4).

8. Dispositif de charge selon la revendication 7, **caractérisé en ce que** ledit convertisseur continu-continu (3) est constitué par un deuxième et troisième interrupteurs statiques (11,12) formant un pont diviseur en parallèle sur lesdites bornes d'entrée dudit convertisseur dévolteur (4), le point milieu dudit pont étant connecté à une première inductance (13) en série avec un shunt (14), et par une première capacité (15) en parallèle sur ledit pont diviseur.

9. Dispositif de charge selon la revendication 8, **caractérisé en ce qu'**il comprend de plus un premier filtre (7) agencé entre ledit second élément (2) et ledit convertisseur continu-continu (3), et un second filtre (8) agencé entre ledit convertisseur dévolteur (4) et ledit premier élément (1).

10. Dispositif de charge selon la revendication 9, **caractérisé en ce que** ledit premier filtre (7) est un filtre en pi formé par une deuxième inductance (16), et une deuxième et troisième capacités (17,18).

11. Dispositif de charge selon la revendication 9, **caractérisé en ce que** ledit second filtre (8) est un filtre passe-bas formé par une troisième inductance (19), et une quatrième capacité (20).

12. Dispositif de charge selon la revendication 11, **caractérisé en ce que** lesdits premier et second filtres (7, 8) comportent chacun un fusible (22, 21) en série avec ladites deuxième et troisième inductances (16, 19).

13. Dispositif de charge selon l'une quelconque des revendications 6 à 12, apte à équiper un véhicule automobile, **caractérisé en ce qu'**il comporte des moyens commandés (11, 12, 23) pour charger avec un courant faible ledit premier élément de stockage (1) à partir dudit second élément de stockage (2), notamment une batterie en mauvais état de charge, afin d'autoriser un démarrage d'un moteur thermique du véhicule même à partir d'une batterie (2) en mauvais état de charge.

## Claims

1. Method for charging a first electrical energy storage element (1), in particular an ultracapacitor (1), from a second electrical energy storage element (2), in particular a battery (2), the said first element (1) having a first nominal direct service voltage and the said second element (2) having a second nominal direct service voltage which is lower than the said first voltage, this method implements a reversible DC/DC converter (3) which is arranged between the said first and second elements (1,2), **characterised in that**
- when the charging voltage of the said first element (1) is lower than the said second voltage, there is additionally put into service a stepdown voltage converter (4) which is arranged between the said DC/DC converter (3) and the said first element (1), and the said DC/DC converter (3) is put out of service;
- when the charging voltage of the said first element (1) is higher than, or the same as the said second voltage, the said stepdown voltage converter (4) is put out of service, and the said DC/DC converter (3) is put into service.

2. Charging method according to claim 1, **characterised in that**, when the said stepdown voltage converter (4) is put into service, the charging current of the said first element (1) is controlled by means of a shunt (14), and by varying the cyclical ratio of a command signal of a first static switch (9) which is arranged between the input and output terminals of the said stepdown voltage converter (4).

3. Charging method according to claim 2, **characterised in that**, when the said DC/DC converter (3) is in service, the charging current of the said first element (1) is controlled by commanding alternately the opening and closure of a second and third static switch (11,12), which are arranged in the said DC/DC converter (3) and form a dividing bridge in parallel on the said input terminals of the said stepdown voltage converter (4), the mid-point of said bridge being connected to a first inductive resistor (13) in series with the said shunt 14).

4. Charging method according to claim 3, **characterised in that** the said DC/DC converter (3) is put out of service by closing the said second switch (11) and opening the said third switch (12).

5. Charging method according to claim 4, **characterised in that** discharge of the said first element (1) is avoided by opening the said first, second and third switches (9, 11, 12).

6. Device for charging a first electrical energy storage element (1), in particular an ultracapacitor (1), from a second electrical energy storage device (2), in particular a battery (2), the said first element (1) having a first nominal direct service voltage, and the said second element (2) having a second nominal direct service voltage which is lower than the said first voltage, this device comprises a reversible DC/DC converter (3) arranged between the said first and second elements (1,2) and additionally comprising a stepdown voltage converter (4) which is arranged between the DC/DC converter (3) and the said first element (1), and switching (11, 12, 9) and control (23) means, **characterised by** these means of switching and control when the charging voltage of the said first element (1) is lower than the said second voltage, put into service the stepdown voltage converter (4) and put out of service the DC/DC converter (3), and, when the charging voltage of the said first element (1) is greater than, or equal to the said second voltage, put out of service the said stepdown voltage converter (4) and put into service the DC/DC converter (3).

7. Charging device according to claim 6, **characterised in that** the said stepdown voltage converter (4) is formed by a first static switch (9) arranged between the input and output terminals of the said stepdown voltage converter (4), and by a diode (10) which is arranged in parallel on the output terminals of the said stepdown voltage converter (4).

8. Charging device according to claim 7, **characterised in that** the said DC/DC converter (3) consists of a second and third static switch (11,12) which form a dividing bridge in parallel on the said input terminals of the said stepdown voltage converter (4), the mid-point of the said bridge being connected to a first inductive resistor (13) in series with a shunt (14), and by a first capacitor (15) in parallel on the said dividing bridge.

9. Charging device according to claim 8, **characterised in that** it additionally comprises a first filter (7) which is arranged between the said second element (2) and the said DC/DC converter (3), and a second filter (8) which is arranged between the said stepdown voltage converter (4) and the said first element (1).

10. Charging device according to claim 9, **characterised in that** the said first filter (7) is a π filter formed by a second inductive resistor (16), and a second and third capacitor (17,18).

11. Charging device according to claim 9, **characterised in that** the said second filter (8) is a low-pass filter formed by a third inductive resistor (19) and a fourth capacitor (20).

12. Charging device according to claim 11, **characterised in that** the said first and second filters (7,8) each comprise a fuse (22,21) which is in series with the said second and third inductive resistors (16,19).

13. Charging device according to any one of claims 6 to 12 which can equip a motor vehicle, **characterised in that** it comprises controlled means (11,12,23) for charging the said first storage element (1) with a low current from the said second storage element (2), and in particular a battery in a poor state of charge, in order to permit starting of a thermal engine of the vehicle even from a battery (2) which is in a poor state of charge.

## Patentansprüche

1. Verfahren zum Aufladen eines ersten Speicherelements (1) zum Speichern von elektrischer Energie, insbesondere eines Ultrakondensators (1), von einem zweiten Speicherelement (2) zum Speichern von elektrischer Energie, insbesondere einer Batterie (2), aus, wobei das besagte erste Element (1) eine erste Nenn-Betriebsgleichspannung und das besagte zweite Element (2) eine zweite Nenn-Betriebsgleichspannung unterhalb der besagten ersten Spannung aufweist, wobei dieses Verfahren einen zwischen den besagten ersten und zweiten Elementen (1, 2) angeordneten umschaltbaren Gleichspannungswandler (3) verwendet,
**dadurch gekennzeichnet, dass:**
- wenn die Ladespannung des besagten ersten Elements (1) kleiner als die besagte zweite Spannung ist, außerdem ein zwischen dem besagten Gleichspannungswandler (3) und dem besagten ersten Element (1) angeordneter Abwärtswandler (4) zugeschaltet und der besagte Gleichspannungswandler (3) ausgeschaltet wird;
- wenn die Ladespannung des besagten ersten Elements (1) größer oder gleich der besagten zweiten Spannung ist, der besagte Abwärtswandler (4) ausgeschaltet und der besagte Gleichspannungswandler (3) eingeschaltet wird.

2. Verfahren zum Aufladen nach Anspruch 1, **dadurch gekennzeichnet, dass**, wenn der besagte Abwärtswandler (4) eingeschaltet ist, der Ladestrom des besagten ersten Elements (1) anhand eines Nebenschlusswiderstands (14) und über eine entsprechende Veränderung des Tastverhältnisses eines Steuersignals eines zwischen den Ein- und Ausgangsklemmen des besagten Abwärtswandlers (4) angeordneten statischen Schalters (9) kontrolliert wird.

3. Verfahren zum Aufladen nach Anspruch 2, **dadurch gekennzeichnet, dass,** wenn der besagte Gleichspannungswandler (3) eingeschaltet ist, der Ladestrom des besagten ersten Elements (1) durch abwechselndes Ansteuern des Öffnens und Schließens eines zweiten und dritten statischen Schalters (11, 12) kontrolliert wird, die in dem besagten Gleichspannungswandler (3) angeordnet sind und eine an den besagten Eingangsklemmen des besagten Abwärtswandlers (4) parallelgeschaltete Teilerbrücke bilden, wobei der Mittelpunkt der besagten Brücke an eine mit dem besagten ersten Nebenschlusswiderstand (14) in Reihe geschaltete erste Induktivität (13) angeschlossen ist.

4. Verfahren zum Aufladen nach Anspruch 3, **dadurch gekennzeichnet, dass** der besagte Gleichspannungswandler (3) durch Schließen des besagten zweiten Schalters (11) und Öffnen des besagten dritten Schalters (12) ausgeschaltet wird.

5. Verfahren zum Aufladen nach Anspruch 4, **dadurch gekennzeichnet, dass** das Entladen des besagten ersten Elements (1) durch Öffnen der besagten ersten, zweiten und dritten Schalter (9, 11, 12) verhindert wird.

6. Vorrichtung zum Aufladen eines ersten Speicherelements (1) zum Speichern von elektrischer Energie, insbesondere eines Ultrakondensators (1), von einem zweiten Speicherelement (2) zum Speichern von elektrischer Energie, insbesondere einer Batterie (2), aus, wobei das besagte erste Element (1) eine erste Nenn-Betriebsgleichspannung und das besagte zweite Element (2) eine zweite Nenn-Betriebsgleichspannung unterhalb der besagten ersten Spannung aufweist, wobei diese Vorrichtung einen zwischen den besagten ersten und zweiten Elementen (1, 2) angeordneten umschaltbaren Gleichspannungswandler (3) umfasst und außerdem einen zwischen dem besagten Gleichspannungswandler (3) und dem besagten ersten Element (1) angeordneten Abwärtswandler (4) sowie Umschalt- (11, 12, 9) und Steuerungsmittel (23) enthält, **dadurch gekennzeichnet, dass** diese Umschalt- und Steuerungsmittel, wenn die Ladespannung des besagten ersten Elements (1) kleiner als die besagte zweite Spannung ist, den besagten Abwärtswandler (4) ein- und den besagten Gleichspannungswandler (3) ausschalten und, wenn die Ladespannung des besagten ersten Elements (1) größer oder gleich der besagten zweiten Spannung ist, den besagten Abwärtswandler (4) aus- und den besagten Gleichspannungswandler (3) einschalten.

7. Vorrichtung zum Aufladen nach Anspruch 6, **dadurch gekennzeichnet, dass** der besagte Abwärtswandler (4) aus einem zwischen den Ein- und Ausgangsklemmen des besagten Abwärtswandlers (4) angeordneten ersten statischen Schalter (9) und einer an den Ausgangsklemmen des besagten Abwärtswandlers (4) parallelgeschalteten Diode (10) besteht.

8. Vorrichtung zum Aufladen nach Anspruch 7, **dadurch gekennzeichnet, dass** der besagte Gleichspannungswandler (3) aus einem zweiten und dritten statischen Schalter (11, 12), die eine an den besagten Eingangsklemmen des besagten Abwärtswandlers (4) parallelgeschaltete Teilerbrücke bilden, wobei der Mittelpunkt der besagten Brücke an eine mit einem Nebenschlusswiderstand (14) in Reihe geschaltete erste Induktivität (13) angeschlossen ist, und aus einer an der besagten Teilerbrücke parallelgeschalteten ersten Kapazität (15) besteht.

9. Vorrichtung zum Aufladen nach Anspruch 8, **dadurch gekennzeichnet, dass** sie außerdem einen zwischen dem besagten zweiten Element (2) und dem besagten Gleichspannungswandler (3) angeordneten ersten Filter (7) und einen zwischen dem besagten Abwärtswandler (4) und dem besagten ersten Element (1) angeordneten zweiten Filter (8) umfasst.

10. Vorrichtung zum Aufladen nach Anspruch 9, **dadurch gekennzeichnet, dass** der besagte erste Filter (7) ein Pi-Filter ist, der durch eine zweite Induktivität (16) und durch eine zweite und dritte Kapazität (17, 18) gebildet wird.

11. Vorrichtung zum Aufladen nach Anspruch 9, **dadurch gekennzeichnet, dass** der besagte zweite Filter (8) ein Tiefpass-Filter ist, der durch eine dritte Induktivität (19) und eine vierte Kapazität (20) gebildet wird.

12. Vorrichtung zum Aufladen nach Anspruch 11, **dadurch gekennzeichnet, dass** der besagte erste und der besagte zweite Filter (7, 8) jeweils eine mit der besagten zweiten bzw. dritten Induktivität (16, 19) in Reihe geschaltete Sicherung (22, 21) umfassen.

13. Vorrichtung zum Aufladen nach einem der Ansprüche 6 bis 12 zur Ausrüstung eines Kraftfahrzeugs, **dadurch gekennzeichnet, dass** sie gesteuerte Mittel (11, 12, 23) umfasst, um das besagte erste Speicherelement (1) von dem besagten zweiten Speicherelement (2), insbesondere einer Batterie in schlechtem Ladezustand, aus mit einem niedrigen Strom aufzuladen, um das Anlassen eines Verbrennungsmotors des Fahrzeugs auch von einer Batterie (2) in schlechtem Ladezustand aus zu ermöglichen.
